# EUROPÄISCHE PATENTSCHRIFT

(11) **EP 2 324 619 B1**
(45) Veröffentlichungstag und Bekanntmachung des Hinweises auf die Patenterteilung: **03.07.2019**
(21) Anmeldenummer: 09778176.9
(22) Anmeldetag: 28.08.2009
(51) Int. Cl.: H04M 3/42

(54) **VERFAHREN ZUR ÜBERTRAGUNG UND AUSHANDLUNG VON NETZWERK KONTROLLIERTEN FUNKTIONSDATEN ZWISCHEN EINEM CLIENT UND EINEM SERVER**
METHOD FOR TRANSMITTING AND NEGOTIATING NETWORK-CONTROLLED FUNCTIONAL DATA BETWEEN A CLIENT AND A SERVER
PROCÉDÉ DE TRANSMISSION ET DE TRAITEMENT DE DONNÉES DE FONCTION COMMANDÉES PAR RÉSEAU ENTRE UN CLIENT ET UN SERVEUR

(30) Priorität: 08.09.2008 DE 102008046058
(43) Veröffentlichungstag der Anmeldung: 25.05.2011
(73) Patentinhaber: Deutsche Telekom AG, 53113 Bonn (DE)
(72) Erfinder: DENNERT, Thomas, 53844 Troisdorf (DE)
(74) Vertreter: Cohausz Hannig Borkowski Wißgott
(86) Internationale Anmeldenummer: PCT/EP2009/006245
(87) Internationale Veröffentlichungsnummer: WO 2010/025875

(56) Entgegenhaltungen:
- US-A1- 2008 102 819

## Beschreibung

Die Erfindung betrifft ein Verfahren zur Übertragung von Steuerdaten innerhalb eines Telekommunikationsnetzes zur Steuerung eines von dem Telekommunikationsnetz, insbesondere von einem mit dem Telekommunikationsnetz in Verbindung stehenden Server, administrierten Dienstes, bei dem das Telekommunikationsnetz einem bestimmten Datenobjekt, insbesondere einem Kontakt eines Adressbuchs, gegenüber anderen Datenobjekten eine Sonderfunktion bereitstellt, wobei von einem Endgerät für die Telekommunikation über das Telekommunikationsnetz zu einer übergeordneten Systemkomponente des Telekommunikationsnetzes eine parametrisierte Nachricht übertragen wird, die zumindest einen ersten Parameter zur Kennzeichnung des Datenobjekts und einen zweiten Parameter mit einer Steuerinformation, insbesondere zur Aktivierung, Deaktivierung oder Änderung des Dienstes, umfasst.

Es ist bekannt, für einzelne Datenobjekte innerhalb eines Telekommunikationsnetzes Sonderfunktionen anzubieten. Bei einem Datenobjekt kann es sich um einen Kontakt eines Adressbuchs handeln, d.h. um einen Telekommunikationsteilnehmer, der beispielsweise durch eine Rufnummer und/ oder einen Namen identifizierbar ist. Mehrere Parameter bilden dabei einen Parametersatz. Grundsätzlich genügt ein einziger Parameter zur eindeutigen Kennzeichnung des Datenobjekts des Typs "Kontakt", beispielsweise eine Rufnummer des Kontakts. Mit einem Telekommunikationsanbieter kann ein bestimmter derartiger Kontakt oder auch mehrere solcher Kontakte, die zusammen eine Gruppe bilden, ausgehandelt werden, für die das vom Telekommunikationsanbieter betriebene Telekommunikationsnetz Sonderfunktionen gewährt. Derartige Sonderfunktionen können beispielsweise eine besonders günstige Tarifierung von Gesprächen zu diesem Kontakt oder das Anzeigen von Statusinformationen zu diesem Kontakt sein, z.B. in der Gestalt, dass der Kontakt vorübergehend nicht erreichbar ist oder sich gerade in derselben oder einer benachbarten Mobilfunkzelle, d.h. in der Nähe befindet.

Aus dem Dokument US 2007/0035513 A1 ist es bekannt, eine Gruppe von Kontakten zu bilden, die bevorzugte Freunde, auch Favoriten oder abgekürzt "Faves" genannt, darstellen. Diese Kontakte werden mit einem Mobilfunkbetreiber, insbesondere mit einem Server des Mobilfunknetzes vereinbart und personenzentrisch auf dem Display des Mobiltelefons, welches ein Client darstellt, durch ein Icon oder ein Foto der Kontaktperson angezeigt. Wird das Mobiltelefon verwendet, erscheint auf dem Display ein Standard-Bildschirm mit den bevorzugten Freunden, die einzeln selektiert werden können und zu denen eine Rufverbindung durch Tastendruck auf die Rufannahmetaste des Mobiltelefons aufgebaut werden kann. Die Favoriten stellen damit Datenobjekte dar, für die das Mobilfunknetz Sonderfunktionen anbietet.

US 2008/102819 bezieht sich auf Adressbuchdaten, die anhand von in einer Serverdatenbank gespeicherten Informationen verifiziert werden, und wobei das Ergebnis dem Benutzer angezeigt wird.

Für die Steuerung eines derartigen Dienstes, müssen den Datenobjekten besondere Parameter und entsprechende Parameterwerte zugeordnet werden, die andere Kontakte, die in dem Adressbuch des Mobiltelefons gespeichert sind, nicht benötigen. Diese Parameter enthalten Informationen z.B. über eine Maximalanzahl der Favoriten innerhalb der Gruppe, eine Identitätsnummer des Kontakts innerhalb der Gruppe, die Position der bildlichen Darstellung des Kontakts auf dem Mobilfunkgerätdisplay, den Erreichbarkeitsstatus des Kontakts oder eine Information darüber, ob sich der Telekommunikationsteilnehmer in der Nähe befindet. Damit der Telekommunikationsanbieter einen besonders günstigen Tarif zu den Favoriten anbieten kann, muss dem Telekommunikationsnetz ferner die Telefonnummer des bevorzugten Kontakts oder eine andere, den Kontakt eindeutig identifizierende Information bekannt sein. Die Vereinbarung der Favoriten mit dem Telekommunikationsnetzbetreiber erfolgt durch Eingabe der notwendigen Daten in das Mobilfunkgerät und anschließende Übertragung zu einem Server des Mobilfunknetzes. Auf dem Mobilfunkgerät wird hierfür eine spezielle Software bereitgestellt.

Die Eingabe der für die Steuerung des Dienstes notwendigen Informationen, insbesondere der einem Datenobjekt zuzuordnenden Steuerparameter am Endgerät ist fehleranfällig. Beispielsweise sind für eine korrekte Einstellung des Dienstes Informationen erforderlich, die nur seitens des Telekommunikationsanbieters bekannt sind, wie beispielsweise die Maximalanzahl der Datenobjekte, für die die Sonderfunktion verfügbar ist. Wählt der Endgerätenutzer ein weiteres Datenobjekt aus, so dass die Maximalanzahl der Datenobjekte, für die der Dienst verfügbar ist, überschritten wird, liegt eine Fehlerhafte Eingabe vor. Ferner kann der Fall vorkommen, dass der Endgerätebenutzer ein Datenobjekt für die Nutzung der Sonderfunktion auswählt, für die dieser Dienst nicht verfügbar ist, beispielsweise, wenn als Datenobjekt des Typs Kontakt eine Notrufnummer oder eine Rufnummer mit einer ausländischen Vorwahl gewählt wird. Schließlich kann auch vorkommen, dass für die Parameter Werte verwendet werden, die seitens des den Dienst verwaltenden Servers, nicht interpretiert, d.h. verstanden werden können. Fehlerhafte Parameterwerte können dazu führen, dass der der Dienst für ein Datenobjekt nicht richtig funktioniert oder gar derart gestört wird, so dass er für kein anderes Endgerät des Telekommunikationsnetzes mehr verfügbar ist.

Es ist daher Aufgabe der Erfindung, ein intelligentes, fehlertolerantes System- oder Netzmanagement eines Dienstes in einer streng hierarchischen Client-Server Umgebung bereitzustellen, der einem oder mehreren Datenobjekten gegenüber anderen, gleichartigen Datenobjekten Sonderfunktionen bereitstellt, wobei bei der Übertragung und Aushandlung des Datenobjektes oder der Datenobjekte zwischen einem Kommunikationsendgerät (Client) und des den Dienst administrierenden Servers des Telekommunikationsnetzes Fehler erkannt und eingabefehlerbedingte Störungen des Dienstes verhindert werden sollen.

Diese Aufgabe wird durch die Merkmale des Anspruchs 1 gelöst. Weitere Merkmale und vorteilhafte Weiterbildungen der Erfindung sind in den Unteransprüchen genannt.

Erfindungsgemäß wird ein Verfahren zur Übertragung von Steuerdaten innerhalb eines Telekommunikationsnetzes zur Steuerung eines von dem Telekommunikationsnetz, insbesondere von einem mit dem Telekommunikationsnetz in Verbindung stehenden Server, administrierten Dienstes vorgeschlagen, bei dem das Telekommunikationsnetz einem bestimmten Datenobjekt, insbesondere einem Kontakt eines Adressbuchs, gegenüber anderen Datenobjekten, insbesondere Adressbuchkontakten, eine Sonderfunktion bereitstellt, wobei von einem Endgerät für die Telekommunikation über das Telekommunikationsnetz zu einer übergeordneten Systemkomponente des Telekommunikationsnetzes eine parametrisierte Nachricht übertragen wird, die zumindest einen ersten Parameter zur Kennzeichnung des Datenobjekts und einen zweiten Parameter mit einer Steuerinformation, insbesondere zur Aktivierung, Deaktivierung oder Änderung des Dienstes, umfasst, und wobei die übergeordnete Systemkomponente zumindest einen der Parameter prüft und der Dienst in Abhängigkeit des Ergebnisses der Prüfung gemäß dem Steuerparameter gesteuert wird.

Eine übergeordnete Systemkomponente ist eine zentrale Komponente des Telekommunikationsnetzes, die für eine Vielzahl von Endgeräten (Clients) des Telekommunikationsnetzes eine Aufgabe, insbesondere die Überprüfung und/ oder Interpretation von Parametern durchführt. Die übergeordnete Systemkomponente ist Teil der Managementebene des Telekommunikationsnetzes, auch Systemebene oder administrative Ebene genannt. Bei einer parametrisierten Nachricht handelt es sich um eine elektronische Benachrichtigung einer Netzwerkkomponente, d.h. übergeordnete Systemkomponente oder des Endgerätes. Die Nachrichten haben dabei zwei wesentliche Funktionen. Sie dienen einerseits dem Transport und der Archivierung von Informationen z.B. Adressbuchkontakte und andererseits sind sie Träger von Steuerdaten für die administrative Ebenen des Systems z.B. des Telekommunikationsnetzes. Die Steuerparameter sind dabei als Befehlssatz eines interpretierenden, informationsverarbeitenden Systems zu verstehen. Mit der Übertragung der Nachricht wird gleichzeitig ein Parameter zur Beschreibung eines Kontaktes, d.h. einer Person (Nutzdatenebene), als auch ein Parameter für die Steuerung des Netzes (Managementebene) übermittelt.

Kerngedanke der vorliegenden Erfindung ist die Überprüfung von zumindest einem mit der Nachricht übermittelten Parameter in einer übergeordneten Systemkomponente von "hoher Intelligenz".

In einer ersten vorteilhaften Ausgestaltung der Erfindung kann der oder können die Parameter auf Plausibilität überprüft werden. So kann beispielsweise überprüft werden, ob der erste Parameter eine Rufnummer gemäß einem internationalen Standard, beispielsweise dem E.164-Standard in der Gestalt 00492211234567 entspricht, d.h. beispielsweise einschließlich Ländervorwahl und/oder Netzvorwahl und ohne Leerzeichen in dem Parameter enthalten ist/ sind. Eine derartige Plausibilitätsprüfung muss nicht unbedingt eine Überprüfung auf Fehler sein, da auch eine Rufnummer ohne Netzvorwahl, d.h. beispielsweise in der Gestalt 01711234567 korrekt ist.

Insbesondere kann im Rahmen der Plausibilitätsprüfung eine Überprüfung des oder der Parameter auf Fehler durchgeführt werden. Bei einer derartigen Fehlerüberprüfung kann beispielsweise untersucht werden, ob die Rufnummer ausschließlich aus Ziffern besteht, ob bei der Verwendung einer Ländervorwahl wie 0049 die vorangestellte "0" bei der Netzvorwahl fälschlicherweise vorhanden ist, oder ob die Ländervorwahl korrekt mit einer Doppelnull oder einem "+"-Zeichen beginnt.

Zusätzlich und/ oder alternativ kann bei der Plausibilitätsprüfung überprüft werden, ob die Steuerinformation des zweiten Parameters einem Befehl entspricht, den der für die Administrierung des Dienstes zuständige Server versteht.

Vorzugsweise kann im Falle eines erkannten Fehlers eine Fehlerkorrektur durchgeführt werden. So kann beispielsweise im Falle eines erkannten Leerzeichens in der Rufnummer dieses gelöscht werden, im Falle einer vorangestellten Null bei der Netzvorwahl und verwendeter Ländervorwahl diese Null gelöscht werden, im Falle einer fehlenden Null bei der Doppelnull der Ländervorwahl, eine Null ergänzt werden, und/ oder im Falle eines anderen Zeichens als das "+" Zeichen bei der Ländervorwahl dieses falsche Zeichen durch ein "+" Zeichen ersetzt werden.

In einer vorteilhaften Weiterbildung des Verfahrens kann eine automatische Vervollständigung eines Parameters durchgeführt werden. So kann beispielsweise im Falle des Fehlens einer Ländervorwahl diese ergänzt werden, wobei die entsprechende Null bei der Netzvorwahl entfernt wird.

Weiterhin kann vorgesehen sein, dass der oder die Parameter auf Dienstkonformität überprüft wird/ werden. Im Rahmen dieser Prüfung kann beispielsweise festgestellt werden, ob ein mit der Nachricht übermitteltes Begehren, die Sonderfunktion für ein bestimmtes Datenobjekt zu aktivieren, deaktivieren oder zu ändern, gewährt werden kann. Im Rahmen der Prüfung der Dienstkonformität können verschiedene Prüfungen zumindest eines der Parameter vorgenommen werden, die nachstehend beispielshaft erläutert werden.

In einer weiteren vorteilhaften Weiterbildung der Erfindung kann die Nachricht auf Vollständigkeit der Parameter geprüft werden. So kann beispielsweise überprüft werden, ob in der Nachricht sowohl der erste als auch der zweite Parameter enthalten ist, bzw. entsprechende Parameterwerte gesetzt sind, d.h. sowohl der das Datenobjekt kennzeichnende Parameter als auch der die Steuerinformation enthaltende Parameter vorhanden ist. Weiterhin kann überprüft werden, ob über den ersten und zweiten Parameter hinausgehend bestimmte andere Parameter vorhanden sind. Ist dies nicht der Fall kann der oder diese bestimmten anderen Parameter, beispielsweise ein Parameter, der die Erreichbarkeit eines Kontaktes anzeigt, automatisch netzseitig hinzugefügt werden.

Erfindungsgemäß kann des Weiteren vorgesehen sein, dass die Nachricht mehrere Parameter enthält und leere Parameter der Parametersätze automatisch vervollständigt werden. Der Endgerätenutzer braucht demgemäß nicht allen verfügbaren Parametern entsprechende Werte zuzuweisen. So kann beispielsweise ein Parameter eine Referenznummer für das Datenobjekt angeben, welche das Datenobjekt innerhalb der Gruppe der Datenobjekte eindeutig identifiziert, für die die Sonderfunktion bereitgestellt wird. Die Referenznummer kann in einem einfachen Fall eine Zahl sein, die für ein zu der Gruppe hinzukommendes Datenobjekt inkrementiert wird. Im Rahmen der automatischen Vervollständigung dieses Parameters kann netzseitig überprüft werden, wie vielen Datenobjekten bereits die Sonderfunktion bereitgestellt wird, so dass anhand dieser Anzahl der das neue Datenobjekt mit einer Referenznummer identifizierende Parameter automatisch mit einem Wert belegt wird, der der um eins erhöhten Anzahl entspricht. Alternativ kann dem Parameter netzseitig automatisch auch eine andere Referenznummer zugeordnet werden.

Die vorgenannten Überprüfungen und/ oder Fehlerkorrekturen können auf der Basis künstlicher Intelligenz beruhen, so dass ein zuverlässiges, intelligentes und fehlertolerantes Managementsystem zur Verwaltung des die Sonderfunktion bereitstellenden Dienstes implementiert wird. Dabei werden die erfindungsgemäßen Prüfungen vorzugsweise von der übergeordneten Systemkomponente durchgeführt, wobei jedoch auch einzelne der genannten Prüfungen und/ oder Korrekturen von dem den Dienst administrierenden Server durchgeführt werden kann. Es sei angemerkt, dass der Server eigenständig oder Bestandteil der übergeordneten Systemkomponente sein kann. In einer einfachen Ausführungsvariante kann der Server die übergeordnete Systemkomponente bilden.

Durch das erfindungsgemäße Verfahren ist es möglich, eine nahezu beliebige Anzahl einfacher Clientsysteme, d.h. Endgeräte, mit geringen rechnerischen Leistungs- und Energieressourcen, mit einem hohen Grad an Komplexität im Hinblick auf Datenanalyse und Fehlertoleranz zu versorgen. Diese Leistungsfähigkeit wir extern, nämlich durch die übergeordnete Systemkomponente zur Verfügung gestellt.

Durch die Fehlerkorrektur und/ oder Vervollständigung eines Parameters wird eine Anpassung der überprüften und gegebenenfalls interpretierten Nachricht ohne Eingriff des Endgeräts vorgenommen. So können viele Clientsysteme Nachrichten generieren und zum Zwecke der Überprüfung der Datensätze und der Parametrisierung sowie der Steuerung der Managementebene an die übergeordnete Systemebene übermitteln. Diese Nachrichten werden entweder bestätigt oder abgeändert an das Clientsystem, d.h. das Endgerät zurückübermittelt. Durch dieses Verfahren ist auch gleichzeitig eine Fehlererkennung auf einer niedrigen Kommunikationsschicht (Echoverfahren) als auch auf einer hohen Anwendungsschicht (fehlertolerante, systemspezifische und dienstspezifische Überprüfung) möglich. Es ermöglicht eine Benutzerunterstützung durch fehlertolerante Eingabemöglichkeit mit Autokorrektur bzw. Wildcards. Auch kann die Integration menschlicher Intelligenz durch Einbindung eines Systemadministrators in die Kommunikationsabläufe in nahezu Echtzeit erfolgen. Für den Benutzer ist dabei die Form der Implementierung der übergeordneten Systemkomponente transparent. Er erhält die gleichen Informationen unabhängig von der Form der Überprüfung oder Verarbeitung im System.

Das Verfahren kann durch eine einfache Nachrichtenübertragung fünf wesentliche Ziele erreichen: 1. die Übertragung von Nutzerdaten, beispielsweise Kontaktinformationen wie Adressinformationen, vom Endgerät zu einer übergeordneten Systemebene, 2. die Übertragung von Steuerinformationen vom Endgerät zu einer übergeordneten Systemebene, beispielsweise die Aktivierung, Deaktivierung oder Änderung eines Dienstes, 3. Möglichkeiten einer auch komplexen und rechenintensiven Überprüfung der Informationen vieler unterschiedlicher Endgeräte (Clientsysteme) auf z.B. Plausibilität und Dienstkonformität durch eine zentrale Systemkomponente, 4. Bestätigung oder Aktualisierung der Clientnachricht durch eine an das Clientsystem zurück übermittelte Nachricht durch die zentrale Systemkomponente und anschließender Aktualisierung im Clientsystem, und 5. Fehlererkennung, die beispielsweise durch ein Echoverfahren durchgeführt werden kann.

Die Übermittlung der Nachricht von dem Endgerät an die übergeordnete Systemkomponente und/ oder die Rückübermittlung einer Bestätigungsnachricht oder geänderten Nachricht an das Endgerät kann durch eine intelligente Synchronisation von Datenbanken, im Falle von Datenobjekten des Typs "Kontakte" beispielsweise eines in dem Endgerät gehaltenen Adressbuchs und eines Netzadressbuchs erfolgen, wie dies in der internationalen Patentanmeldung PCT/EP2008/007836 beschrieben ist.

Die an das Endgerät zurückübermittelte Nachricht kann alternativ eine elektronische Kurznachricht, beispielsweise eine SMS, mit einer Information über die Aktivierung, Deaktivierung oder Änderung des Dienstes sein.

Ein weiterer Vorteil des Verfahrens ist eine sehr flexible Steuerung der Zugriffmöglichkeit sowohl durch eine Benutzerschnittstelle am Endgerät, insbesondere einer grafischen Benutzerschnittstelle, als auch durch eine entsprechende Schnittstelle im Bereich der übergeordneten Systemebene, beispielsweise vermittels eines Web-Interfaces für einen Benutzer oder ein Administrator-Interface, mit unterschiedlichen Rechten. Es ergeben sich daher beliebige Zugangspunkte, von denen aus der Dienst konfiguriert, d.h. aktiviert, deaktiviert oder geändert werden kann, insbesondere vom Endgerät oder von einer Netzkomponente aus, wobei im Wesentlichen gleiche administrative Abläufen erfolgen.

In einer vorteilhaften Weiterbildung der Erfindung kann netzseitig eine Verknüpfung verschiedener Benutzernachrichten erfolgen. Die Benutzernachrichten können daher, mit für den Benutzer möglicherweise gar nicht zugänglichen Informationen verknüpft und zu einer neuen Nachricht geformt werden. Diese Nachricht kann dem Endgerät übermittelt werden und ersetzt seinen ursprünglichen generierten Informationsinhalt, d.h. die auf dem Endgerät vorliegenden Parameter bzw. Parameterwerte. Beispielsweise kann mit einer Nachricht eines ersten Endgerätes, das rein beispielhaft ein Mobiltelefon ist, ein Parameter übermittelt werden, der eine Information über den geografischen Aufenthaltsort dieses Endgerätes, beispielsweise eine Kennung der aktuellen Mobilfunkzelle enthält. Weiterhin kann eine Nachricht eines zweiten Endgerätes ebenso einen Parameter mit einer Aufenthaltsinformation dieses zweiten Endgerätes an die übergeordnete Systemkomponente senden. Gehört das zweite Endgerät einem Kontakt des ersten Endgerätes, für das die Sonderfunktion bereitgestellt wird, kann die Aufenthaltsinformation aus der Nachricht des zweiten Endgerätes mit dem entsprechenden Parameter der Nachricht des ersten Endgerätes zu einer neuen Nachricht verknüpft werden. Vorzugsweise kann dies dann durchgeführt werden, wenn sich das zweite Endgerät in der Nähe des ersten Endgerätes befindet. Die neue Nachricht wird dann dem Endgerät übermittelt, welches die aktuelle Information über den Aufenthalt des zweiten Endgerätes speichert und anzeigen kann.

Bei der Prüfung zumindest eines, vorzugsweise aller in der an die übergeordnete Systemkomponente übermittelten Nachricht enthaltenen Parameter können zeitliche, räumlicher oder sonstige Randbedingungen in der übergeordneten Systemkomponente berücksichtigt werden. In zeitlicher Hinsicht kann beispielsweise berücksichtigt werden, ob die Sonderfunktion nur für einen bestimmten Zeitraum verfügbar ist. Im Falle einer Aktivierung oder Änderung des Dienstes nach dem Ablauf dieses Zeitraums kann die Aktivierung beispielsweise abgelehnt werden. In räumlicher Hinsicht kann beispielsweise überprüft werden, ob der erste Parameter einen Kontakt mit einer Rufnummer kennzeichnet, die einem inländischen oder ausländischen Anschluss zugewiesen ist. Sofern die Sonderfunktion nur für inländische oder netzeigene Anschlüsse bzw. Telekommunikationsteilnehmer verfügbar ist, führt die Überprüfung zu einer Ablehnung der Aktivierungsanfrage. Als weitere Randbedingungen kann beispielsweise eine Maximalanzahl an Datenobjekten berücksichtigt werden, für die die Sonderfunktion bereitgestellt wird. Die Aktivierbarkeit, Deaktivierbarkeit oder Änderbarkeit des Dienstes kann dementsprechend aufgrund vorgegebener Regeln erfolgen, wobei berücksichtigt werden kann, für wie viele Datenobjekte der Dienst bereits aktiv ist und ob die Anzahl dieser Datenobjekte eine vorgegebene Maximalanzahl übersteigt, wann für das neue Datenobjekt eine Aktivierung erfolgt ist, und/ oder ob seit dem Zeitpunkt der letzten Änderung des Datenobjektes oder eines anderen Datenobjektes, für das der Dienst bereits aktiv ist, ein bestimmter Zeitraum vergangen ist.

Bei einem Datenobjekt kann es sich beispielsweise um einen Kontakt, einen Termin, eine Notiz oder eine Aufgabe handeln, der bzw. die auf dem Endgerät in einer Datenbank abgelegt ist. Ein Datenobjekt wird durch Parameter und diesen zugeordnete Parameterwerte definiert, wobei denjenigen Datenobjekten, für die der Dienst mit Sonderfunktionen aktiv ist, zumindest ein zusätzlicher Parameter zugeordnet ist, der für die Steuerung des Dienstes verwendet werden kann. Handelt es sich bei dem Datenobjekt um einen Kontakt, kann das Datenobjekt beispielsweise durch eine virtuelle Visitenkarte gebildet sein, die sämtliche, den Kontakt charakterisierende Informationen wie Namen, Vorname, geschäftliche, private und/ oder mobile Telefonnummer, E-Mail Adresse etc. enthalten kann. Die erste Datenbank stellt in diesem Fall ein Adressbuch innerhalb des Endgeräts dar, die zweite Datenbank ein netzseitiges Adressbuch, welches durch die Synchronisation als Backup des ersten Adressbuchs fungiert. Das netzseitiges Adressbuch, auch Netzadressbuch genannt, kann mit Adressbüchern anderer Endgeräte, beispielsweise anderer Mobiltelefonen, Pda oder Computern abgeglichen werden, so dass das Adressbuch stets auf jedem Endgerät aktuell ist.

Soll der Dienst für ein Datenobjekt aktiviert, deaktiviert oder geändert werden, kann das Datenobjekt aus einer Vielzahl anderer Datenobjekte, die in der ersten Datenbank gespeichert sind, erfindungsgemäß dadurch ausgewählt werden, dass einem dem Datenobjekt zugeordneten Steuerparameter ein Parameterwert zugewiesen wird, der die Zugehörigkeit oder Nichtzugehörigkeit des Datenobjektes zu einer Gruppe mit einer Sonderfunktion belegter Datenobjekte anzeigt. Zeigt der Parameterwert des Steuerparameters an, dass der Dienst für das Datenobjekt nicht aktiv ist, braucht das Datenobjekt keine weiteren Parameter zur Steuerung des Dienstes zu besitzen.

Erfindungsgemäß kann der Steuerparameter ein Statusparameter sein, dem das Kommunikationsendgerät jeweils einen bestimmten Statusparameterwert zuweist, wenn der Dienst für das Datenobjekt aktiviert, deaktiviert oder geändert werden soll. So kann dem Statusparameter beispielsweise der Wert 'assign' zugeordnet werden, wenn der Dienst für das Datenobjekt aktiviert werden soll. Weiterhin kann beispielsweise dem Statusparameter der Wert 'withdraw' zugeordnet werden, wenn der Dienst für das Datenobjekt deaktiviert werden soll. Schließlich kann dem Statusparameter beispielsweise der Wert 'modified' zugeordnet werden, wenn der Dienst für das Datenobjekt geändert werden soll. Der Statusparameter kann damit das Anliegen des Nutzers des Endgerätes betreffend eine Änderung des Dienstes für ein bestimmtes Datenobjekt tragen und dieses dem Kommunikationsnetzwerk auf einfachem Wege mitteilen.

Für die Synchronisation der beiden Datenbanken wird ein Synchronisationsprotokoll verwendet. Vorzugsweise kann das standardisierte SyncML Protokoll verwendet werden, welches in dem Standard RFC2426 definiert ist. Dieses Protokoll hat den Vorteil, dass Parameter, die von den definierten Standardparametern des Standard abweichen, durch eine Benennung definiert werden, die mit einem 'X' beginnt.

Im Falle einer Aktivierung des Dienstes für das Datenobjekt, können mehreren dem Datenobjekt zugeordneten Steuerparametern Parameterwerte zugewiesen werden. So kann beispielsweise ein erster Steuerparameter die Gesamtanzahl der Gruppenmitglieder tragen, für die der Dienst freigeschaltet werden kann. Ein weiterer Parameter kann eine Identifikationsnummer des Datenobjektes innerhalb der Gruppe bevorzugter Datenobjekte beinhalten. Schließlich kann ein Steuerparameter eine Angabe enthalten, wie und/ oder wo das Datenobjekt auf einem Display des Endgerätes dargestellt werden soll. Eine Zuweisung mehrere Parameterwerte zu mehreren Parametern kann auch im Falle einer Änderung oder Deaktivierung des Dienstes erfolgen. Für den letztgenannten Fall kann den Parametern, die für die Deaktivierung keine relevanten Steuerinformationen enthalten, ein Wert "null" zugeordnet werden.

Vorzugsweise kann der Server im Falle einer positiven Überprüfung des Datenobjekts den Dienst für das Datenobjekt aktivieren. Er kann dann dem Statusparameter einen den aktiven Status, beispielsweise 'active', anzeigenden Parameterwert zuweisen. Schließlich kann das Datenobjekt in der zweiten Datenbank mit dem neuen Statusparameter abspeichert werden.

Anschließend kann das Datenobjekt mit dem geänderten Statusparameter auf das Kommunikationsendgerät durch eine Synchronisation der Datenbanken übertragen werden, wobei das alte Datenobjekt durch das neue Datenobjekt in der ersten Datenbank ersetzt werden kann. Die Synchronisierung kann vorzugsweise im Rahmen desselben Synchronisationsprozesses erfolgen, der ursprünglich von dem Endgerät initiiert worden ist. Die zwischen dem Endgerät und dem Server aufgebaute Synchronisationsverbindung zum Abgleich der Datenbanken kann damit während des gesamten Überprüfungsvorganges und bis zu einer Rückübertragung des Datenobjekts aktiv bleiben.

Zur Information des Benutzers des Endgeräts kann der Server eine elektronische Kurznachricht mit einer Information über die erfolgreiche oder nicht erfolgreiche Aktivierung, Deaktivierung oder Änderung des Dienstes an das Endgerät übermitteln. Bei der elektronischen Kurznachricht kann insbesondere eine SMS (Short Message Service) oder eine SMS0 verwendet werden, die sofort auf dem Display des Endgeräts angezeigt wird.

In einer vorteilhaften Weiterbildung der Erfindung kann mit der Änderungsanforderung dem Kontakt ein weiterer Statusparameter mit dem Parameterwert 'pending' vom Endgerät zugeordnet werden, um weitere Änderungsanforderungen vor Abschluss der laufenden Änderung zu verhindern.

Erfindungsgemäß kann weiterhin vorgesehen werden, dass dem Steuerparameter oder den Steuerparametern von dem Server des Telekommunikationsnetzes ein Parameterwert oder Parameterwerte zugewiesen werden und das Datenobjekt mitsamt des oder der geänderten Parameters oder Parameter in der dem Server zugeordneten Datenbank gespeichert wird bzw. werden. Nach der Speicherung kann dann der Server eine Synchronisierung dieser Datenbank mit der dem Endgerät zugeordneten Datenbank zur Übertragung der Steuerdaten der Steuerparameter an das Endgerät einleiten. Damit wird ermöglicht, dass auch das Telekommunikationsnetz von sich aus eine Änderung des Dienstes vornehmen und dem Endgerät mitteilen kann, beispielsweise, wenn der Dienst nur für einen bestimmten Zeitraum aktiv gehalten werden soll und nach Ablauf diese Zeitraumes automatisch eine Deaktivierung erfolgen soll.

Erfindungsgemäß kann der Server im Falle einer negativen Überprüfung den Dienst für das Datenobjekt deaktivieren, dem Steuerparameter einen den inaktiven Status anzeigenden Parameterwert zuweisen, und das Datenobjekt in der zweiten Datenbank mit dem neuen Steuerparameterwert abspeichern. Vorzugsweise kann das Datenobjekt anschließend mit dem geänderten Steuerparameter auf das Kommunikationsendgerät durch Synchronisation der zweiten Datenbank mit der ersten Datenbank übertragen und das ursprüngliche Datenobjekt durch das neue Datenobjekt in der ersten Datenbank ersetzt werden. Hieraus ergibt sich die Wiederherstellung des ursprünglichen Status des Datenbankobjektes, d.h. der Änderungswunsch ist zurückgewiesen.

Die Überprüfung des Datenobjekts kann von einem Server erfolgen, der mit der zweiten Datenbank in Verbindung steht. Dieser Server kann in diesem Fall die zentrale Verwaltung der netzseitigen Datenbank und die Administration des Dienstes übernehmen. Vorzugsweise kann der Dienst jedoch auch von einem zweiten Server, beispielsweise von der übergeordneten Systemkomponente verwaltet werden, wobei der erste Server das Datenobjekt oder zumindest den oder die Steuerparameter des Datenobjekts zur Überprüfung an den zweiten Server übertragt, der das Datenobjekt insbesondere hinsichtlich der Aktivierung des Dienstes überprüft.

Es sei darauf hingewiesen, dass die vorliegende Erfindung nicht auf die vorstehend beschriebenen bevorzugten Ausführungsformen beschränkt ist. Vielmehr können auch andere Überprüfungen der Parameter auf Plausibilität und/ oder Dienstkonformität und automatische Vervollständigungen von Parametern durchgeführt werden, ohne von dem Grundgedanken der Erfindung abzuweichen. Dessen ungeachtet ist der Umfang der Erfindung durch den beigefügten unabhängigen Anspruch definiert.

## Patentansprüche

1. Verfahren zur Übertragung von Steuerdaten innerhalb eines Telekommunikationsnetzes zur Steuerung eines von einem mit dem Telekommunikationsnetz in Verbindung stehenden Server administrierten Dienstes, bei dem das Telekommunikationsnetz einem bestimmten Datenobjekt, wobei das Datenobjekt ein Kontakt eines Adressbuchs ist, gegenüber anderen Datenobjekten eine Sonderfunktion bereitstellt, wobei von einem Endgerät für die Telekommunikation über das Telekommunikationsnetz zu einer übergeordneten Systemkomponente des Telekommunikationsnetzes eine parametrisierte Nachricht übertragen wird, die zumindest einen ersten Parameter zur Kennzeichnung des Datenobjekts und einen zweiten Parameter mit einer Steuerinformation, insbesondere zur Aktivierung, Deaktivierung oder Änderung des Dienstes, umfasst, und wobei die übergeordnete Systemkomponente zumindest einen der Parameter prüft und der Dienst in Abhängigkeit des Ergebnisses der Prüfung gemäß dem Steuerparameter gesteuert wird, wobei der oder die Parameter auf Plausibilität überprüft wird/werden, **dadurch gekennzeichnet dass** der oder die Parameter auf Fehler überprüft wird/werden und dass überprüft wird, ob die Steuerinformation des zweiten Parameters einem Befehl für den für die Administrierung des Dienstes zuständigen Servers entspricht und im Falle eines erkannten Fehlers eine Fehlerkorrektur durchgeführt wird.

2. Verfahren nach Anspruch 1, **dadurch gekennzeichnet, dass** eine automatische Vervollständigung eines Parameters vorgenommen wird.

3. Verfahren nach Anspruch 1 oder 2, **dadurch gekennzeichnet, dass** der oder die Parameter auf Dienstkonformität überprüft wird/ werden.

4. Verfahren nach einem der vorherigen Ansprüche, **dadurch gekennzeichnet, dass** die Nachricht auf Vollständigkeit der Parameter geprüft wird.

5. Verfahren nach einem der vorherigen Ansprüche, **dadurch gekennzeichnet, dass** die Nachricht mehrere Parameter enthält und leere Parameter der Parametersätze automatisch vervollständigt werden.

6. Verfahren nach einem der vorherigen Ansprüche, **dadurch gekennzeichnet, dass** nach Erhalt und Überprüfung der Nachricht eine Bestätigungsnachricht an das Endgerät zurück übermittelt wird.

7. Verfahren nach einem der vorherigen Ansprüche, **dadurch gekennzeichnet, dass** im Falle einer Fehlerkorrektur eine um den Fehler korrigierte Nachricht und/ oder bei einer automatischen Vervollständigung eine vervollständigte Nachricht an das Endgerät zurück übermittelt wird.

8. Verfahren nach einem der vorherigen Ansprüche, **dadurch gekennzeichnet, dass** der Dienst über eine Schnittstelle am Endgerät oder über eine Internet-Schnittstelle eingestellt werden kann.

9. Verfahren nach einem der vorherigen Ansprüche, **dadurch gekennzeichnet, dass** die Internetschnittstelle als personalisiertes Web-Portal für einen Benutzer oder einen Administrator mit unterschiedlichen Rechten ausgebildet ist.

10. Verfahren nach einem der vorherigen Ansprüche, **dadurch gekennzeichnet, dass** zwei oder mehr Nachrichten zu einer neuen parametrisierten Nachricht miteinander verknüpft werden.

11. Verfahren nach einem der vorherigen Ansprüche, **dadurch gekennzeichnet, dass** bei der Prüfung zeitliche, räumliche und/ oder sachliche Bedingungen abgeprüft werden.

12. Verfahren nach Anspruch 10 oder 11, **dadurch gekennzeichnet, dass** die neue parametrisierte Nachricht dem Endgerät übermittelt wird und die in ihr enthaltenen Parameter die Parameter der ursprünglichen Nachrichten ersetzen.

13. Verfahren nach einem der vorherigen Ansprüche, **dadurch gekennzeichnet, dass** der zweite Parameter ein Statusparameter ist, dem das Endgerät jeweils einen bestimmten Statusparameterwert zuweist, wenn der Dienst für das Datenobjekt aktiviert, deaktiviert oder geändert werden soll.

14. Verfahren nach einem der vorherigen Ansprüche, **dadurch gekennzeichnet, dass** die Nachricht von der übergeordneten Systemkomponente daraufhin überprüft wird, ob der Dienst für das Datenobjekt aktiviert, deaktiviert oder geändert werden kann.

15. Verfahren nach einem der vorherigen Ansprüche, **dadurch gekennzeichnet, dass** die übergeordnete Systemkomponente im Falle einer positiven Überprüfung den Dienst für das Datenobjekt aktiviert und dem Statusparameter einen den aktiven Status anzeigenden Parameterwert zuweist.

16. Verfahren nach einem der vorherigen Ansprüche, **dadurch gekennzeichnet, dass** die Systemkomponente im Falle einer negativen Überprüfung den Dienst für das Datenobjekt deaktiviert, dem Steuerparameter einen den inaktiven Status anzeigenden Parameterwert zuweist, und eine Nachricht mit dem korrigierten Statusparameter an das Endgerät zurück übermittelt.

17. Verfahren nach einem der vorherigen Ansprüche, **dadurch gekennzeichnet, dass** die Systemkomponente die Nachricht oder zumindest einen der Parameter zur Überprüfung an den Server überträgt, der den Dienst verwaltet.

## Claims

1. Method for transmitting control data in a telecommunication network for controlling a service administered by a server connected to the telecommunication network, in which the telecommunications network provides a certain data object, in particular a contact of an address book, with a special function in respect to other data objects, in which a parametrised message is transmitted by the terminal device for telecommunication via the telecommunication network to a higher order system component of the telecommunication network, said message comprising at least one first parameter for characterising the data object and a second parameter containing control information, in particular for the activation, deactivation or modification of the service, and in which the higher order system component checks at least one of the parameters and the service is controlled depending on the result of the check and in accordance with the control parameter, in which the parameter(s) is/are checked for plausibility, **characterised by** the parameter(s) being checked for errors and a check being performed whether the control information of the second parameter corresponds to a command from the server responsible for administration of the service, and by error correction being carried out if an error is identified.

2. Method according to claim 1, **characterised by** automatic completion of a parameter being carried out.

3. Method according to claim 1 or 2, **characterised by** the parameter(s) being checked for conformity with the service.

4. Method according to one of the preceding claims, **characterised by** the message being checked for integrity of the parameters.

5. Method according to one of the preceding claims, **characterised by** the message containing multiple parameters and empty parameters in the parameter sets being completed automatically.

6. Method according to one of the preceding claims, **characterised by** a confirmation message being sent back to the terminal device after the message is received and checked.

7. Method according to one of the preceding claims, **characterised by**, in case of error correction, an error-corrected message and/or, in case of automatic completion, a completed message being sent back to the terminal device.

8. Method according to one of the preceding claims, **characterised by** the ability to configure the service via an interface on the terminal device or an Internet interface.

9. Method according to one of the preceding claims, **characterised by** the Internet interface being realised as a personalised web portal for a user or administrator with different rights.

10. Method according to one of the preceding claims, **characterised by** two or more messages being linked to each other to form a new parametrised message.

11. Method according to one of the preceding claims, **characterised by** time, space and/or objective conditions being checked in the course of the check.

12. Method according to claim 10 or 11, **characterised by** the transmission of the new parametrised message to the terminal device, with the parameters it contains replacing the parameters of the original messages.

13. Method according to one of the preceding claims, **characterised by** the second parameter being a status parameter, to which the terminal device respectively assigns a certain status parameter value when a service for the data object is to be activated, deactivated or changed.

14. Method according to one of the preceding claims, **characterised by** the message being checked by the higher order system component to determine whether the service for the data object can be activated, deactivated or changed.

15. Method according to one of the preceding claims, **characterised by** the higher order system component activating the service for the data object in case of a positive check result and assigning a parameter value indicating the active status to the status parameter.

16. Method according to one of the preceding claims, **characterised by** the system component, in case of a negative check result, deactivating the service for the data object, assigning a parameter value indicating the inactive status to the control parameter and sending a message with the corrected status parameter to the terminal device.

17. Method according to one of the preceding claims, **characterised by** the system component transmitting the message or at least one of the parameters for checking to the server that administers the service.

## Revendications

1. Procédé de transmission de données de commande au sein d'un réseau de télécommunication pour la commande d'un service administré par un serveur connecté au réseau de télécommunication, dans lequel le réseau de télécommunication met à disposition d'un objet de données, ce dernier étant un contact d'un carnet d'adresses, par rapport à d'autres objets de données une fonction spéciale dans laquelle un message paramétré est transmis d'un appareil final de télécommunication au travers du réseau de télécommunication à un composant du système de niveau supérieur du réseau de télécommunication, comprenant au moins un premier paramètre de caractérisation de l'objet de données et un second paramètre avec une information de commande, en particulier relatif à l'activation, la désactivation ou la modification du service, sachant que le composant du système de niveau supérieur contrôle au moins en terme de plausibilité un des paramètres et le service est commandé en fonction du résultat de ce contrôle, **caractérisé en ce que** le dispositif contrôle le ou les paramètres en terme d'erreur, le contrôle portant sur le fait que l'information de commande du second paramètre correspond à une commande d'administration du serveur chargé du service et, qu'en cas de détection d'une erreur, une correction de l'erreur est exécutée.

2. Procédé selon la revendication 1, **caractérisé en ce qu'**un paramètre est automatiquement complété.

3. Procédé selon la revendication 1 ou 2, **caractérisé en ce que** le ou les paramètres sont contrôlés en terme de conformité au service.

4. Procédé selon l'une des revendications précédentes, **caractérisé en ce que** le message est contrôlé en terme d'exhaustivité des paramètres.

5. Procédé selon l'une des revendications précédentes, **caractérisé en ce que** le message contient plusieurs paramètres et que tout paramètre vide est automatiquement complété.

6. Procédé selon l'une des revendications précédentes, **caractérisé en ce que**, après réception et contrôle du message, un message de confirmation est renvoyé à l'appareil final.

7. Procédé selon l'une des revendications précédentes, **caractérisé en ce que** le dispositif renvoie à l'appareil final un message corrigé en cas de correction d'erreur, ou un message complété si l'opération a porté sur la complétion.

8. Procédé selon l'une des revendications précédentes, **caractérisé en ce que** le service est configuré au travers d'une interface sur l'appareil final ou au travers d'une interface Internet.

9. Procédé selon l'une des revendications précédentes, **caractérisé en ce que** l'interface Internet est un portail Web personnalisé pour un utilisateur ou un administrateur avec des autorisations différenciables.

10. Procédé selon l'une des revendications précédentes, **caractérisé en ce qu'**au moins deux messages sont associés sous forme d'un nouveau message paramétré.

11. Procédé selon l'une des revendications précédentes, **caractérisé en ce que** le contrôle effectué porte sur des condition temporelles et/ou spatiales.

12. Procédé selon l'une des revendications 10 ou 11, **caractérisé en ce que** le nouveau message paramétré est transmis à l'appareil final et que les paramètres qu'il contient remplacent ceux du message original.

13. Procédé selon l'une des revendications précédentes, **caractérisé en ce que** le second paramètre est un paramètre d'état auquel l'appareil final attribue une valeur de paramètre d'état lorsque le service doit être activé, désactivé ou modifié pour l'objet de données.

14. Procédé selon l'une des revendications précédentes, **caractérisé en ce que** le composant du système de niveau supérieur contrôle le message pour déterminer si le service peut être activé, désactivé ou modifié pour l'objet de données.

15. Procédé selon l'une des revendications précédentes, **caractérisé en ce que** le composant du système de niveau supérieur, si le résultat du contrôle est positif, active le service pour l'objet de données et attribue au paramètre d'état une des valeurs de paramètre indiquant l'état actif.

16. Procédé selon l'une des revendications précédentes, **caractérisé en ce que** le composant du système de niveau supérieur, si le résultat du contrôle est négatif, désactive le service pour l'objet de données, attribue au paramètre de commande une des valeurs de paramètre indiquant l'état inactif et renvoie à l'appareil final un message contenant le paramètre d'état corrigé.

17. Procédé selon l'une des revendications précédentes, **caractérisé en ce que** le composant du système transmet le message ou au moins un des paramètres au serveur gérant le service pour contrôle.
